# FASCICULE DE BREVET EUROPEEN

(11) **EP 2 724 132 B1**
(45) Date de publication et mention de la délivrance du brevet: **20.03.2019**
(21) Numéro de dépôt: 12741085.0
(22) Date de dépôt: 18.06.2012
(51) Int. Cl.: G01K 17/00, G01N 25/48

(54) **CAPTEUR DE MESURE CALORIMÉTRIQUE DIFFÉRENTIELLE ET PROCÉDÉ DE FABRICATION**
DIFFERENTIALKALORIMETRISCHER SENSOR UND VERFAHREN ZU DESSEN HERSTELLUNG
DIFFERENTIAL CALORIMETRIC SENSOR AND PROCESS FOR THE PRODUCTION THEREOF

(30) Priorité: 21.06.2011 FR 1155432
(43) Date de publication de la demande: 30.04.2014
(73) Titulaire: Centre National de la Recherche Scientifique, 75016 Paris (FR); Setaram Instrumentation, 69300 Caluire (FR)
(72) Inventeur: GARDEN, Jean-Luc, 38130 Echirolles (FR); MOIROUX, Gaël, 38000 Grenoble (FR); LACHKAR, Pierre, 38100 Grenoble (FR)
(74) Mandataire: IPAZ
(86) Numéro de dépôt international: PCT/IB2012/053057
(87) Numéro de publication internationale: WO 2012/176107

(56) Documents cités:
- GARDEN J L ET AL: "Thermodynamics of small systems by nanocalorimetry: From physical to biological nano-objects", THERMOCHIMICA ACTA, ELSEVIER SCIENCE PUBLISHERS, AMSTERDAM, NL, vol. 492, no. 1-2, 10 août 2009 (2009-08-10), pages 16-28, XP026305549, ISSN: 0040-6031, DOI: 10.1016/J.TCA.2009.02.012 [extrait le 2009-02-28] cité dans la demande
- ZHURAVLEV E ET AL: "Fast scanning power compensated differential scanning nano-calorimeter: 2. Heat capacity analysis", THERMOCHIMICA ACTA, ELSEVIER SCIENCE PUBLISHERS, AMSTERDAM, NL, vol. 505, no. 1-2, 10 juin 2010 (2010-06-10), pages 14-21, XP027053546, ISSN: 0040-6031 [extrait le 2010-05-18]
- CARRETO-VAZQUEZ V H ET AL: "Miniaturized calorimeter for thermal screening of energetic materials", MICROELECTRONICS JOURNAL, MACKINTOSH PUBLICATIONS LTD. LUTON, GB, vol. 41, no. 12, 1 décembre 2010 (2010-12-01), pages 874-881, XP027504857, ISSN: 0026-2692, DOI: 10.1016/J.MEJO.2010.07.014 [extrait le 2010-11-17]
- GARDEN ET AL: "Non-equilibrium heat capacity of polytetrafluoroethylene at room temperature", THERMOCHIMICA ACTA, ELSEVIER SCIENCE PUBLISHERS, AMSTERDAM, NL, vol. 461, no. 1-2, 6 août 2007 (2007-08-06), pages 122-136, XP022184815, ISSN: 0040-6031, DOI: 10.1016/J.TCA.2007.03.013

## Description

L'invention concerne le domaine de la calorimétrie et, plus particulièrement, un capteur de mesure calorimétrique différentielle et son procédé de fabrication.

On connaît déjà de nombreux calorimètres qui ont tous pour objectif de mesurer les quantités de chaleur mises en jeu lors d'une réaction chimique ou d'une transformation de la matière.

En effet, par exemple lors d'une transformation physique, telle qu'une transition de phase, un échange de chaleur se produit entre la matière et l'environnement extérieur, dont le sens dépend de la nature endothermique ou exothermique du processus de transition.

En conséquence, la mesure des quantités de chaleur permet d'accéder à des informations sur l'état structural de la matière. C'est pourquoi les calorimètres sont utilisés dans de nombreux domaines scientifiques, en particulier la physique et la chimie, et donc dans l'industrie.

Sont notamment concernées la métallurgie, pour l'étude des réactions d'oxydoréduction et des transitions thermiques, la chimie des polymères ou encore la biochimie et l'industrie agroalimentaire.

En particulier, en biophysique, la calorimétrie est la seule méthode qui permette d'accéder de manière directe à des données thermodynamiques (stabilité thermodynamique, énergie libre, entropie, etc...)

Les calorimètres connus mettent en oeuvre différentes méthodes, notamment la calorimétrie différentielle à balayage, la calorimétrie adiabatique, la calorimétrie isotherme ou encore la calorimétrie à courant alternatif ou calorimétrie AC (« *Alternating Current* » dans la terminologie anglaise).

Les principes de base sous-jacents à ces méthodes sont identiques (présence d'éléments thermométriques, parfois un ou plusieurs éléments de chauffage, une ou plusieurs zones isothermes en très bon contact thermique avec l'échantillon ou la référence). Cependant, chaque méthode a ses propres contraintes, et un instrument ou un capteur dédié à une méthode de mesure peut difficilement être utilisé pour une autre.

Par exemple, pour accroître la sensibilité d'un capteur, celui-ci peut être conçu pour fonctionner dans des conditions adiabatiques. L'adiabaticité (R) décrit le degré d'isolation thermique de la zone isotherme contenant l'échantillon par rapport à l'extérieur considéré comme un bain thermique.

Si R >> 1, alors la mesure calorimétrique se réalise dans des conditions adiabatiques, et si R << 1, ce n'est pas le cas.

L'adiabaticité est un critère relatif qui dépend de la dynamique de la méthode de mesure calorimétrique utilisée. Le critère d'adiabaticité se définit par la valeur prise par le ratio suivant : R = τ/Δtₘₑₛ, avec τ = C/K qui est la constante de temps thermique du calorimètre. C est la capacité calorifique de l'échantillon (et celle du capteur et celle de la zone isotherme) et K est le coefficient d'échange thermique, ou conductance thermique parfois appelée « *fuite thermique* », qui définit le lien thermique entre l'échantillon et le bain thermique. Δtₘₑₛ est l'échelle de temps expérimentale. C'est l'échelle de temps caractéristique sur laquelle la mesure calorimétrique est réalisée. Elle dépend de la méthode calorimétrique utilisée.

Dans le cas de la calorimétrie AC, la notion d'adiabaticité se définit par rapport à la fréquence de l'oscillation de température. Dans ce cas, Δ*tₘₑₛ* = *1*/*ω* où ω = 2πf est la fréquence angulaire de l'oscillation de température.

Il est notamment fait référence à cette méthode dans l'article de Garden et al « Thermodynamics of small systems by nanocalorimetry : from physical to biological nano-objects » Thermochimica Acta, vol.492, 10 août 2009, pages 16-28.

Cet article décrit un capteur de mesure pour une méthode de calorimétrie AC comprenant une cellule thermométrique et une cellule chauffante, destinées à être assemblées, la cellule thermométrique comprenant une membrane supportant un élément actif. Ce capteur est destiné à des petits échantillons.

Dans ce capteur, la fuite thermique s'établit au travers de la membrane. La mesure pourra être réalisée dans des conditions adiabatiques en choisissant une fréquence des oscillations de température importante, de telle sorte que même pour un τ relativement petit (C petit), on pourra avoir *R* = ωτ >> 1.

La présente demande de brevet s'intéresse à la calorimétrie différentielle à balayage ou calorimétrie DSC dans la terminologie anglaise (Differential Scanning Calorimetry) qui a été utilisée pour concevoir le capteur selon l'invention.

Cette technique d'analyse consiste à mesurer les différences des échanges de chaleur entre un échantillon à analyser et une référence, chacun étant placé dans une cellule de mesure.

A ce jour, les cellules de mesure connues dans le cas de la calorimétrie DSC ne sont pas conçues pour fonctionner dans des conditions adiabatiques.

Une mesure différentielle présente l'avantage d'éliminer la majeure partie des dérives thermiques dues à l'environnement, sans ajouter de bruit au système. Ainsi, elle permet de détecter uniquement le signal induit par la transformation thermodynamique à étudier.

De façon générale, lorsqu'un capteur de mesure calorimétrique existe, quelle que soit la méthode utilisée, et que l'on souhaite un fonctionnement en mode différentiel, on fabrique deux capteurs le plus identiques possible en ce qui concerne leurs propriétés thermiques. Ces deux capteurs sont ensuite montés dans un environnement thermique commun et la mesure différentielle est obtenue à partir des résultats provenant des deux capteurs indépendants.

En effet, dans ce cas, les deux capteurs conservent les mêmes conditions thermiques, à savoir une même isolation thermique et une même symétrie thermique, pour l'élément actif présent dans le capteur.

A titre d'exemple, dans le domaine des sciences du vivant, pour étudier l'évolution thermodynamique d'une protéine, deux cellules identiques sont réalisées, ces cellules étant connectées à l'environnement de façon thermiquement équivalente. L'une d'elle est remplie avec un volume de solution tampon, constituant la référence, l'autre étant remplie avec une solution comprenant la solution tampon et la protéine, constituant l'échantillon.

En pratique, les deux cellules sont placées dans un four dont la température évolue de façon déterminée, généralement selon des rampes. Celle-ci va entraîner une transformation physique de l'échantillon et donc un flux de chaleur échangé entre l'échantillon et le four. Une mesure différentielle entre les deux cellules de mesure permet de déterminer la différence de flux de chaleur entre l'échantillon et la référence et d'obtenir donc directement le signal utile engendré par la protéine.

De nombreux appareils utilisent la technique de calorimétrie différentielle à balayage dans laquelle est prévu un étalonnage préalable à la mesure et un balayage d'un gaz inerte pour éviter toute réaction de l'échantillon avec l'atmosphère du four.

Ces appareils ont longtemps apporté satisfaction car ils permettent non seulement de mesurer la quantité de chaleur absorbée ou libérée au cours d'une transition de phase mais également d'observer des changements de phase plus compliqués, comme les transitions vitreuses.

On peut notamment citer les calorimètres commercialisés par les sociétés Setaram, Mettler Toledo, Netzsch, TA instruments ou MicroCal pour les plus importantes, avec uniquement des calorimètres DSC dédiés aux sciences du vivant chez TA instruments, MicroCal ou Setaram.

Ces derniers présentent cependant des inconvénients qui tiennent notamment au volume minimum de l'échantillon, nécessaire pour réaliser une mesure. En effet, bien que le volume dans la zone de mesure ne soit que de quelques centaines de microlitres, le volume minimum est de l'ordre du millilitre, pour tenir compte à la fois du volume de la cellule de mesure et du volume minimum nécessaire à l'amenée du produit dans la cellule.

Ce volume minimum se révèle prohibitif dans le domaine des sciences du vivant ou dans le domaine pharmaceutique, dans lesquels les échantillons à étudier sont disponibles en très faibles quantités, notamment du fait du coût de leur synthèse. De plus, il est préférable que la concentration de molécules d'échantillon soit relativement faible, de façon à limiter les problèmes d'interaction biochimique et d'agrégation.

Enfin, avec les calorimètres connus, la vitesse des rampes de température prévues dans le four est limitée à 2°C/min, car des rampes trop importantes conduiraient à des gradients de température dans l'échantillon, et donc à des mesures peu fiables. Ceci constitue un obstacle pour observer certains événements cinétiques induits par des vitesses rapides, comme les transitions vitreuses.

La société Mettler Toledo a récemment commercialisé un calorimètre de type DSC pouvant travailler avec des quantités infimes d'échantillons et des vitesses de scan allant jusqu'à 10⁵ K/s, mais ces instruments sont uniquement adaptés à des mesures sur des échantillons solides.

Les documents EP-1 351 052 et US-6 079 873 décrivent des dispositifs calorimétriques obtenus par des techniques de micro et nanofabrication qui sont adaptés à des mesures calorimétriques sur des échantillons de faible volume.

Cependant, aucune réalisation industrielle de ces dispositifs n'est disponible.

Par ailleurs, le dispositif décrit dans le document EP-1 351 052 ne permet pas de mettre en oeuvre une analyse calorimétrique différentielle à balayage. En effet, il est dédié à la détection calorimétrique d'interactions biochimiques ou biologiques réalisées à température constante.

Le dispositif décrit dans le document US-6 079 873 comprend deux plateformes suspendues, en silicium, qui servent de support pour l'échantillon et la référence.

Ce dispositif est limité dans ses applications car il ne permet pas la mesure d'échantillons biologiques en solution aqueuse. En effet, il n'est pas conçu pour recevoir un échantillon liquide. Il faudrait que celui-ci ne présente qu'un volume très réduit. Cependant, dans ce cas, l'échantillon s'évaporerait très vite en générant des effets thermiques parasites dus à l'évaporation. Enfin, l'échantillon et la référence sont posés sur les plateformes. Il en résulte des couplages thermiques trop faibles provoquant des gradients de température perturbant la mesure pour des rampes de température élevées, car la chaleur n'a pas alors le temps de se propager dans tout l'échantillon.

L'invention a pour objet de pallier ces inconvénients en proposant un capteur de mesure calorimétrique différentielle performant, conçu pour de très faibles volumes d'échantillon solide ou liquide et fonctionnant avec des rampes de température beaucoup plus importantes que les calorimètres disponibles aujourd'hui sur le marché, tout en présentant une résolution du même ordre et en étant d'une fabrication simplifiée.

Ainsi, l'invention concerne un capteur de mesure calorimétrique différentiel comprenant deux cellules, une cellule thermométrique et une autre cellule, chaque cellule comprenant :
- une membrane en un matériau à faible conductivité thermique, avec une première face et une deuxième face, et
- des moyens de support de la membrane, en un matériau présentant un fort coefficient de diffusivité thermique, typiquement supérieur ou égal 1 cm²/s, en contact avec ladite première face de la membrane,
la cellule thermométrique comprenant au moins deux éléments actifs thermométriques situés sur ladite première face de la membrane, et les deux cellules étant destinées à être assemblées de telle sorte que les deuxièmes faces des membranes desdites cellules sont en vis-à-vis, un échantillon et une référence utilisés pour réaliser la mesure pouvant être placés entre les deux membranes et directement en contact avec lesdites deuxièmes faces et au moins l'une des cellules comportant un moyen de fermeture en vis-à-vis de la première face de la membrane, un espace libre étant ménagé entre ledit moyen de fermeture et la membrane pour un gaz, le moyen de fermeture comportant un perçage qui est en communication avec l'espace libre et la hauteur du moyen de fermeture étant adaptée de façon à créer une conduction thermique de valeur prédéterminée via le gaz entre la membrane et le moyen de fermeture, ledit capteur de mesure calorimétrique différentiel étant caractérisé en ce que l'autre cellule est une cellule de chauffage, au moins deux éléments actifs de chauffage étant situés sur ladite première face de la membrane de cette autre cellule, de telle sorte que chacun desdits éléments actifs de chauffage est sensiblement aligné avec l'un desdits éléments actifs thermométriques de la cellule thermométrique, lorsque les deux cellules sont assemblées, l'échantillon et la référence utilisés pour réaliser la mesure pouvant alors être placés entre deux éléments actifs de chacune des deux cellules.

Ainsi, les éléments actifs ne sont jamais en contact direct avec un échantillon utilisé pour réaliser la mesure.

Par ailleurs, tous les éléments actifs sont réalisés sur une même membrane, ce qui simplifie le procédé de fabrication.

Selon l'invention, un échantillon faisant l'objet de la mesure est placé en contact direct avec les deuxièmes faces des membranes entre un élément actif de chauffage de la cellule de chauffage et un élément actif thermométrique de la cellule thermométrique en regard, tandis qu'une référence est placée entre l'autre élément actif de chauffage de la cellule de chauffage et l'autre élément actif thermométrique de la cellule thermométrique.

De façon générale, le capteur de mesure selon l'invention est destiné à être placé dans un four qui permet de réguler la température à l'intérieur du capteur et éventuellement, d'appliquer des rampes de température.

Puisque le capteur selon l'invention comprend une cellule de chauffage, le four peut être utilisé pour chauffer à une température constante l'échantillon placé à l'intérieur du capteur. La cellule de chauffage permet alors d'appliquer quasi instantanément des rampes de température à l'échantillon.

De façon avantageuse, la deuxième face de la membrane d'au moins une cellule comporte, en regard desdits au moins deux éléments actifs, une couche en un matériau présentant une forte conductivité thermique, typiquement supérieure à 1 Watt par centimètre et par kelvin (W/cm.K).

Cette couche est notamment réalisée en or et elle permet d'homogénéiser la température de chaque élément actif thermométrique.

De façon avantageuse, lesdits moyens de support sont situés en périphérie de la membrane.

Cette disposition permet d'isoler thermiquement les éléments actifs de chaque cellule par rapport auxdits moyens de support, au moyen de la membrane.

De préférence, les éléments actifs de chaque cellule sont enrobés dans une couche de matériau isolant électriquement.

La présence de cette couche assure également une protection mécanique des éléments actifs de la cellule.

Ainsi, avec le capteur de mesure selon l'invention, les éléments actifs thermométriques et chauffants sont situés du même côté que les moyens de support de la membrane, ce qui accroît leur résistance.

L'invention concerne un calorimètre différentiel comprenant un capteur de mesure selon l'invention, un four dans lequel est disposé ledit capteur, ainsi qu'un moyen de refroidissement.

Ce calorimètre comprend avantageusement des moyens d'alimentation en un gaz sous pression qui sont en communication fluidique avec les espaces libres ménagés dans le capteur de mesure.

L'invention concerne également un procédé de fabrication d'un capteur de mesure selon l'invention consistant à réaliser deux cellules, une cellule thermométrique et une autre cellule, chaque cellule comprenant une membrane en un matériau à faible conductivité thermique, ce procédé comprenant une étape (a₁) au cours de laquelle sont réalisés simultanément au moins deux éléments actifs sur une première face de la membrane de la cellule thermométrique, et une étape (a₂) dans laquelle sont fixés, sur la première face de la membrane de la cellule thermométrique, des moyens de support présentant un fort coefficient de diffusité thermique,
l'autre cellule étant obtenue en réalisant l'étape (a₂) précédente et
les cellules étant destinées à être assemblées, de telle sorte que les deuxièmes faces des membranes respectives desdites cellules sont en vis-à-vis.

Selon l'invention, préalablement à l'étape (a₁), est réalisée une étape (a₀) dans laquelle la membrane est fixée sur une bague en matériau céramique, cette bague étant en contact avec la deuxième face de la membrane, le procédé consistant à réaliser l'étape (a₂) après l'étape (a₁), puis une étape (a₃) dans laquelle la bague est retirée.

Dans un mode préféré de mise en oeuvre du procédé, l'autre cellule est une cellule de chauffage qui est obtenue en mettant en oeuvre les étapes (a₁) et (a₂) précédentes, au moins deux éléments actifs de chauffage étant réalisés au cours de l'étape (a₁), et éventuellement les étapes (a₀) et (a₃).

Le procédé selon l'invention comporte avantageusement une étape complémentaire consistant à déposer, après l'étape (a₁), une couche de résine isolante électriquement, de façon à enrober les éléments actifs d'au moins une des deux cellules.

Par ailleurs, le procédé comporte avantageusement une autre étape complémentaire, après l'étape (a₁), consistant à déposer sur la deuxième face d'une membrane d'au moins une des deux cellules, et en regard d'un élément actif de ladite cellule, une couche en un matériau présentant une forte conductivité thermique.

Pour la réalisation de la cellule thermométrique, l'étape (a₁) comprend, de préférence, les étapes suivantes :
(b₁) une étape de dépôt d'une couche de métal,
(b₂) une étape de lithographie et
(b₃) une étape de gravure ionique.

De préférence, le métal déposé lors de l'étape (b₁) présente un coefficient de température élevé, typiquement supérieur à 2.10⁻³K⁻¹.

Pour la réalisation d'une cellule chauffante, l'étape (a₁) comprend, de préférence, les étapes suivantes :
(b'₁) une étape de dépôt d'une couche de métal,
(b'₂) une étape de lithographie et
(b'₃) une étape de gravure humide.

L'invention sera mieux comprise et d'autres buts, avantages et caractéristiques de celle-ci apparaîtront plus clairement à la lecture de la description qui suit et qui est faite au regard des dessins annexés, sur lesquels :
- la figure 1 est une vue en perspective représentant schématiquement les deux cellules d'un exemple de capteur de mesure selon l'invention,
- la figure 2 est une vue en coupe des deux cellules d'un capteur de mesure selon l'invention, et
- les figures 3 à 6 représentent schématiquement les étapes de réalisation d'une cellule d'un capteur selon l'invention. Les éléments communs aux différentes figures seront désignés par les mêmes références.

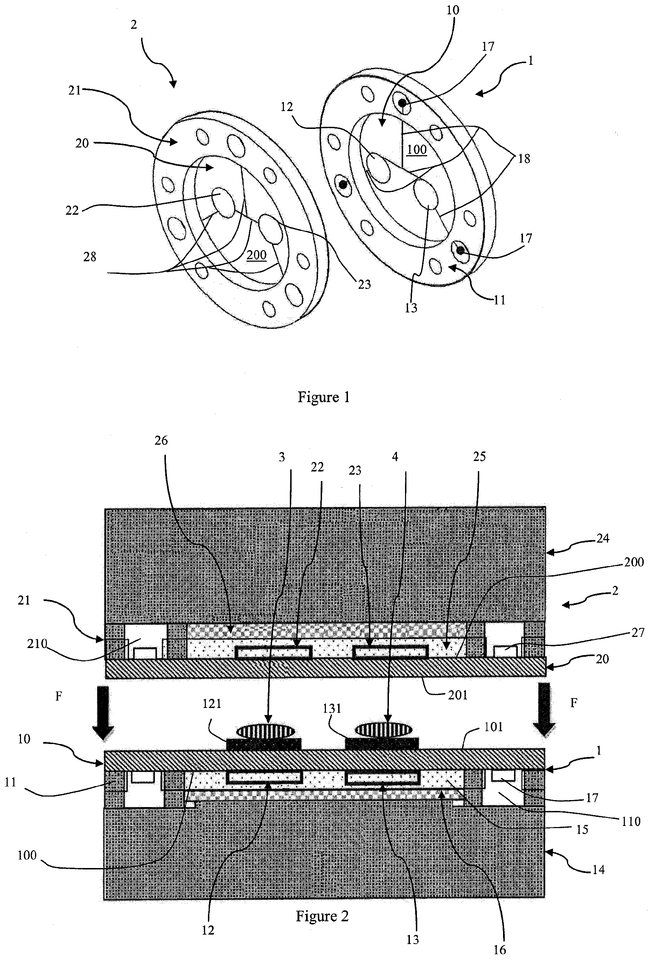

La figure 1 montre schématiquement et en perspective, une cellule thermométrique 1 et une cellule chauffante 2.

Chacune de ces cellules comporte une membrane 10, 20.

Cette membrane est supportée par des moyens 11, 21. Dans l'exemple illustré, ces moyens de support présentent la forme d'une bague positionnée en périphérie de la membrane 10, 20.

En pratique, la bague 11, 21 est fixée sur une première face 100, 200 de la membrane.

Sur cette même première face, la membrane 10, 20 comporte deux éléments actifs : les éléments thermométriques 12 et 13 et les éléments chauffants 22 et 23.

L'invention n'est pas limitée au mode de réalisation illustré et les moyens de support pourraient présenter une autre forme. Cependant, la forme annulaire illustrée à la figure 1 permet d'obtenir une symétrie thermique. En tout état de cause, la forme retenue doit permettre d'isoler thermiquement les éléments actifs des moyens de support. Par ailleurs, les éléments actifs thermométriques doivent être isolés thermiquement l'un de l'autre, comme les éléments chauffants.

Comme cela apparaîtra lors de la description ultérieure du procédé de réalisation, les éléments actifs thermométriques et les éléments actifs chauffants sont des résistances métalliques lithographiées dans des couches minces, lesquelles permettent une réponse thermique très rapide.

Tous ces éléments sont réalisés simultanément par les mêmes étapes de fabrication, ce qui simplifie la fabrication du capteur.

Ceci est rendu facile par les techniques de microfabrication qui sont utilisées pour réaliser les cellules et qui seront décrites dans la suite de la description. Un capteur selon l'invention avec un nombre considérable d'éléments actifs permettrait des mesures calorimétriques en parallèle sur un nombre important d'échantillons. Ceci est intéressant dans le domaine de la biologie, en particulier dans le domaine de la conception de médicaments.

Le fait de placer deux éléments actifs sur une même membrane présente a priori des inconvénients.

Comme on le verra dans la suite de la description, les éventuels problèmes thermiques posés par la présence de plusieurs éléments actifs sur une même membrane sont réglés grâce à un fonctionnement spécifique du capteur.

Les références 18 et 28 désignent des fils de contact, permettant de relier les éléments actifs de chaque cellule aux contacts (non illustrés sur la figure 1).

D'autres caractéristiques du capteur selon l'invention vont maintenant être décrites en référence à la figure 2.

Cette figure illustre les deux cellules 1 et 2 du capteur dans leur position respective, avant leur assemblage, l'assemblage étant réalisé selon les flèches F.

Par rapport à la figure 1, la cellule thermométrique 1 a été retournée, de telle sorte que ce sont les deuxièmes faces 101 et 201 des membranes 10 et 20 qui sont directement en vis-à-vis l'une de l'autre.

Par ailleurs, sur les moyens de support 11, 21 de chaque cellule, sont disposés des moyens de fermeture 14, 24 (non illustrés sur la figure 1).

La figure 2 montre un mode préféré de réalisation du capteur selon l'invention, dans lequel les éléments actifs 12, 13 et 22, 23 de chaque cellule 1, 2 sont enrobés dans une couche de résine 15, 25. Cette couche de résine n'est pas illustrée sur la figure 1.

La figure 2 montre que les dimensions des moyens de fermeture 14, 24 et de la couche de résine 15, 25 sont choisies de telle sorte qu'un espace libre 16, 26 est ménagé entre la couche de résine 15, 25 et les moyens de fermeture 14, 24. L'intérêt de cet espace sera expliqué dans la suite de la description.

Enfin, les références 17, 27 désignent les contacts auxquels sont reliés les fils 18, 28. Ils sont accessibles au travers de trous traversants 110, 210 ménagés dans les moyens de support 11, 21.

Les membranes 10, 20 sont réalisées en un matériau à faible conductivité thermique, inférieure à 10 mW/cm.K.

Elles peuvent être typiquement réalisées en Kapton®, commercialisé par la société DuPont. Ce matériau présente une conductivité thermique λ de 1,2 mW/cm.K et une chaleur spécifique de 1,13 J/gK.

Le Kapton® présente l'avantage d'être stable sur une large plage de température (de - 269°C à 400°C) et de présenter une grande inertie chimique.

On peut utiliser un autre polyimide, tel que celui commercialisé sous la dénomination Upilex® par la société Ube Industries, lequel présente une conductivité thermique de 3 mW/cm.K.

Cette membrane présente une épaisseur micrométrique, typiquement comprise entre 10 et 100 µm. Dans cette gamme de valeurs, la membrane est suffisamment résistante, tout en restant peu conductrice et en présentant une capacité calorifique adaptée à la mesure d'échantillons de faible volume.

Ainsi, la membrane permet d'assurer une bonne isolation thermique tout en présentant une résistance mécanique suffisante.

La membrane pourrait également être réalisée en verre, sa conductivité thermique serait alors d'environ 10 mW/cm.K.

Par ailleurs, les moyens de support 11, 21 sont réalisés en un matériau présentant un fort coefficient de diffusivité thermique, typiquement supérieur à 1 W/cm.K.

Le matériau qui sera utilisé de préférence est le cuivre car il présente une très bonne conductivité thermique (d'environ 4 W/cm.K), tout en ayant un coût de fabrication raisonnable.

Les moyens de fermeture 14, 24 peuvent également être réalisés en cuivre.

Par ailleurs, les moyens de fermeture 14, 24 comportent chacun un perçage qui n'est pas illustré sur la figure 2, ce perçage étant en communication avec chacun des espaces 16, 26.

Ces perçages permettront, lors de l'utilisation du capteur selon l'invention, d'injecter un gaz, notamment de l'azote, sous pression atmosphérique, dans les espaces 16 et 26.

La présence de ce gaz sous pression exercera une force sur les faces des membranes avec lesquelles il est en contact, ce qui assurera un bon contact thermique entre les deux membranes 10 et 20, celles-ci prenant en sandwich l'échantillon ou la référence, lorsque les deux cellules seront assemblées.

Ceci permettra de mieux enfermer l'échantillon et la référence disposés entre les deux membranes.

Dans l'exemple illustré à la figure 2, la hauteur des deux moyens de fermeture 14 et 24 est différente. En pratique, la hauteur du moyen de fermeture 14 de la cellule thermométrique est adaptée de façon à créer une conduction thermique de valeur prédéterminée via le gaz entre la membrane 10 et le moyen de fermeture 14. C'est ce qui déterminera la constante de temps thermique de la mesure. La hauteur du moyen de fermeture 24 de la cellule de chauffage 2 est adaptée de façon à créer une conduction thermique de valeur négligeable via le gaz entre la membrane 20 et le moyen de fermeture 24.

En pratique, le moyen de fermeture 24 pourrait être omis dans la mesure où la pression du gaz situé du côté de la deuxième face 200 n'empêche pas de réaliser un bon contact entre les deux membranes.

De plus, dans l'exemple décrit, la cellule thermométrique comprend un moyen de fermeture 14 grâce auquel la fuite thermique s'établit par le gaz présent dans l'espace 16.

Cependant, la cellule de chauffage 2 pourrait être également conçue pour remplir cette fonction grâce au moyen de fermeture 24 et à l'espace 26.

De même, les deux cellules pourraient être conçues de manière symétrique, la fuite thermique étant alors équivalente au niveau de chaque cellule.

Les moyens de fermeture 14, 24 illustrés à la figure 2 pourraient être omis. Dans ce cas, la chaleur du four serait directement transmise à l'échantillon et à la référence placés entre les deux membranes du capteur, au travers des membranes.

Lorsqu'au moins l'un des deux est présent, la conduction thermique entre l'environnement extérieur, typiquement un four, d'une part et l'échantillon et la référence, d'autre part, s'effectue par l'intermédiaire d'au moins l'un de ces moyens et du gaz présent dans un des espaces 16, 26 et non au travers des membranes. Ceci résulte du fait que la conductance thermique au travers du gaz est bien plus importante que celle au travers de la membrane réalisée en un matériau à faible conductivité thermique.

On peut encore noter que, grâce aux moyens de fermeture et au gaz, la constante de temps du capteur peut être réglée en modifiant la pression du gaz ou le volume des espaces 16, 26, c'est-à-dire la distance entre les moyens de fermeture et la membrane 10, 20. Elle peut également être réglée en choisissant de façon appropriée la nature du gaz, chaque gaz ayant une conductivité thermique différente.

Ceci permet de faire fonctionner le capteur dans des conditions adiabatiques, en fonction de la valeur de la rampe de température.

Ainsi, le gaz sous pression a deux fonctions : d'une part, enfermer l'échantillon et la référence entre les deux membranes et donc assurer un couplage thermique important et d'autre part, faciliter la conduction de la chaleur depuis l'environnement extérieur au capteur, vers l'échantillon et la référence. La conduction thermique est réalisée au travers du gaz, même si celui-ci n'est pas sous pression. La conduction ne se produirait plus qu'en cas de vide secondaire, avec des pressions de l'ordre de 10⁻⁵ ou 10⁻⁶ mbar.

Ainsi, avec le capteur selon l'invention, le lien thermique entre l'échantillon et le bain thermique est réalisé par l'intermédiaire du gaz situé derrière la membrane. Ceci distingue ce capteur des capteurs connus fonctionnant selon une méthode de calorimétrie AC. En effet, lorsque ces capteurs comportent une membrane supportant un élément actif, le lien thermique entre l'échantillon et le bain thermique s'établit au travers de cette membrane.

Grâce au fonctionnement du capteur, les éventuels problèmes thermiques liés à la présence de plusieurs éléments actifs sur une même membrane ne se posent plus. En effet, la membrane ne joue plus de rôle dans l'établissement du lien thermique entre d'une part, l'échantillon et la référence, et d'autre part, l'extérieur du capteur.

De surcroît, avec le capteur selon l'invention, les gradients de température dans l'échantillon et la référence sont évités. Au contraire, lorsque les gradients de température se font au travers d'une membrane, celle-ci les impose à l'échantillon et la référence.

La figure 2 illustre, en regard de chacun des éléments actifs 12 et 13 de la cellule thermométrique, une couche 121 et 131. Cette couche est réalisée en un matériau présentant une forte conductivité thermique, typiquement supérieure à 1 W/cm.K.

Le matériau utilisé est typiquement de l'or.

Ces deux couches 121 et 131 sont situées sur la face 101 de la membrane 10, soit sur la face opposée à la face 100 qui reçoit les éléments actifs 12 et 13.

Cependant, l'invention n'est pas limitée à ce mode de réalisation et ces couches en matériau à forte conductivité thermique pourraient également être prévues sur la face 201 de la membrane 20, en regard des éléments actifs 22 et 23. De telles couches pourraient également être prévues sur les deux faces 101, 201 des membranes 10 et 20.

Le capteur selon l'invention est utilisé de la façon suivante :
Un échantillon 3 est placé sur l'élément 121 de la cellule thermométrique 1, tandis qu'une référence 4 est placée sur l'élément 131 de la cellule 1.
Les deux cellules sont ensuite assemblées en déplaçant par exemple la cellule 2 selon les flèches F puis en les fixant ensemble lorsque la membrane 20 vient en contact avec les éléments 121 et 131.

Ainsi, l'échantillon et la référence sont en contact avec les deuxièmes faces 101 et 201 des membranes 10 et 20. Par contre, les éléments actifs de chaque cellule ne sont jamais en contact avec l'échantillon ou la référence, puisqu'ils sont séparés d'eux par une membrane 10, 20. Cette dernière les protège de tout contact avec un liquide (ou un solide), malgré sa faible épaisseur.

Par ailleurs, la membrane 10, 20 isole thermiquement l'échantillon ou la référence des moyens de support 11, 21 et également l'échantillon de la référence, ce qui contribue à augmenter la résolution du capteur. Par contre, un élément thermométrique 12, 13 est en bon contact thermique avec l'élément de chauffage correspondant 22, 23. Dans la mesure où le matériau constitutif des membranes présente une faible conductivité thermique, il n'est pas nécessaire de les structurer pour les rendre plus isolantes et leur tenue mécanique s'en trouve renforcée. L'épaisseur des membranes est ainsi plus importante que celle des plateformes décrites dans le document US-6 079 873.

Sur les figures 1 et 2, a été représenté un capteur comprenant une cellule thermométrique 1 et une cellule de chauffage 2. Cependant, le capteur pourrait fonctionner sans que la cellule 2 ne comporte d'éléments actifs de chauffage. Dans ce cas, le chauffage de l'échantillon et de la référence, si elle est prévue, sera assuré par le four dans lequel le capteur est destiné à être placé. Lorsque le chauffage est assuré par le four seul, la température de l'échantillon et de la référence suit la rampe de température appliquée par le four avec un certain retard. Par contre, lorsque le chauffage est assuré à la fois par le four et par la cellule de chauffage, la température de l'échantillon et de la référence suit quasi instantanément la rampe de température appliquée par le four. Ceci permet d'appliquer des rampes de température beaucoup plus rapides.

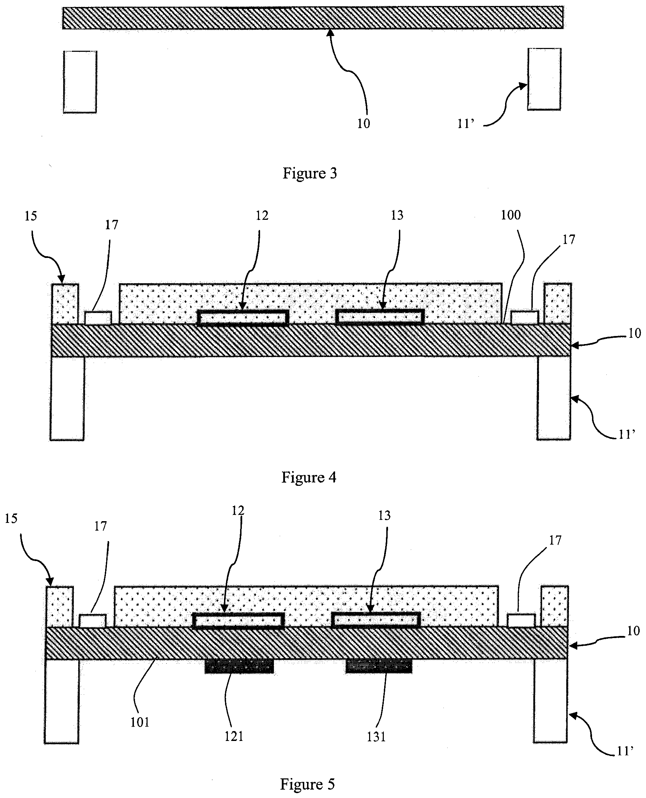

Les étapes de réalisation d'une cellule thermométrique d'un capteur selon l'invention vont maintenant être décrites en référence aux figures 3 à 6. Elles correspondent à un mode préféré du procédé de fabrication d'un capteur selon l'invention.

La figure 3 illustre la membrane 10 de la cellule thermométrique.

En pratique, cette membrane est obtenue par une découpe à l'emporte-pièce dans une feuille de polyimide, notamment une feuille de Kapton®.

Comme illustré sur la figure 1, cette membrane 10 est de forme circulaire. Toute autre forme pourrait être choisie, la forme circulaire présentant l'avantage d'une symétrie thermique.

La référence 11' désigne une bague en un matériau céramique. De façon plus générale, la bague peut être réalisée en tout matériau usinable et présentant un très faible coefficient de dilatation thermique, typiquement inférieur à 10⁻⁵ /°C.

Cette bague peut notamment être réalisée en Macor® qui est une céramique commercialisée par la société Corning Incorporated.

Ce matériau peut être utilisé à haute température. Il présente une conductivité thermique moyenne (λ = 1,46 W/m/°C) et une faible diffusivité thermique (a = 7,3.10⁻⁷m²/s). Il présente également un faible coefficient d'expansion thermique (114.10⁻⁷/°C de 20 à 600°C) ce qui lui permet de rester rigide et de ne pas se déformer à haute température. Enfin, il présente une grande inertie chimique. Il n'interfère donc pas avec les étapes de microfabrication qui sont mises en oeuvre, notamment pour réaliser les éléments actifs des cellules.

La membrane 10 est destinée à être collée sur la bague en céramique 11'.

Sur la première face 100 de la membrane 10 sont ensuite réalisés les éléments actifs 12 et 13 de la cellule thermométrique, illustrés sur la figure 4.

Ces éléments actifs sont obtenus grâce aux étapes suivantes qui utilisent des techniques de microélectronique.

Une couche de métal va tout d'abord être déposée sur la membrane 10.

A titre d'exemple, le matériau utilisé est du platine qui est déposé par pulvérisation magnétron.

D'autres matériaux pourraient être utilisés. De façon générale, un métal stable chimiquement et présentant un coefficient de température élevée convient pour cette application.

De façon préférée, une couche dite d'accroche est déposée sur la membrane 10, avant le dépôt du platine. Cette couche d'accroche peut notamment être constituée d'un alliage de tungstène et de titane. Le chrome est aussi parfaitement adapté.

L'épaisseur de la couche de platine est typiquement de 0,36 µm, tandis que celle de la couche d'accroche est typiquement de 0,01 µm.

Le platine en couche mince présente un coefficient de température assez élevé (a = 2 à 3.10⁻³K⁻¹), ce qui lui confère une grande sensibilité thermique. C'est pourquoi ce métal est très fréquemment utilisé lors de l'élaboration de thermomètres. De plus, sa grande inertie chimique lui confère une stabilité dans le temps très grande même à des températures élevées, ce qui n'est pas le cas des thermocouples en général.

L'étape suivante est une étape de lithographie qui permet d'obtenir, sur la couche de platine, le motif souhaité. Celui-ci est protégé par le dépôt d'une couche de résine, qui est ensuite durcie.

La dernière étape est une étape de gravure ionique, grâce à laquelle la couche métallique est éliminée de la surface de la membrane, dans les zones non recouvertes par le motif.

Ainsi, le procédé selon l'invention permet de réaliser les éléments actifs en mettant en oeuvre une même étape de dépôt de couche mince, une même étape de microphotolithographie et une même étape de gravure. Ils sont donc réalisés simultanément.

Le procédé de réalisation est donc considérablement simplifié, par rapport à un procédé consistant à réaliser deux capteurs indépendants comprenant chacun un élément actif.

De plus, les éléments actifs étant obtenus simultanément par les mêmes étapes de fabrication, ils présentent donc des caractéristiques électriques quasiment identiques. Cette identité est essentielle dans une mesure différentielle.

De préférence, les éléments thermométriques 12 et 13 présentent la forme d'un disque et sont situés dans la partie centrale de la membrane 10.

La forme d'un disque est préférée car elle assure une symétrie thermique. Cependant, d'autres formes pourraient être envisagées. Par ailleurs, en étant situés dans la partie centrale de la membrane, les éléments 12 et 13 sont isolés sensiblement de façon identique par rapport à la bague 11.

Les éléments thermométriques obtenus présentent une très faible capacité calorifique, qui est de 0,652 mJ/K.

Au cours de cette étape de lithographie, sont également réalisés les contacts 17 et les fils de contact 18. Une étape de soudage intervient ultérieurement pour assurer le contact électrique entre les fils et les contacts.

Les deux éléments thermométriques peuvent être montés selon un schéma de type pont de Wheatstone pour obtenir directement la température différentielle entre l'échantillon et la référence.

L'étape suivante du procédé consiste à déposer une couche de résine sur l'ensemble de la première face 100 de la membrane 10, à l'exception des zones de la membrane supportant les contacts 17.

Cette couche de résine 15 permet d'isoler électriquement les éléments thermométriques 12 et 13 et d'assurer une protection mécanique.

Cette résine peut notamment être un polyimide photosensible qui se durcit après une étape de recuit. A titre d'exemple, on peut citer le polyimide PoliFuji 2210 A®, commercialisé par la société Fujifilm.

A l'issue des étapes qui viennent d'être décrites, on obtient le produit illustré à la figure 4.

La figure 5 illustre une autre étape, dans laquelle sont réalisés, sur la deuxième face 101 de la membrane 10, des éléments permettant d'homogénéiser la température de chaque élément thermométrique 12 et 13. Ces éléments 121, 131 seront, dans la suite de la description, dénommés éléments isothermes.

Ces éléments isothermes sont obtenus en plaçant un masque sur la deuxième face 101 puis en déposant, notamment par pulvérisation magnétron, une couche métallique.

De préférence, une couche d'un matériau d'accroche, par exemple en WTi, sera déposée avant la couche de métal.

Le masque permet de réaliser les deux éléments isothermes 121, 131 en regard des deux éléments thermométriques 12 et 13.

Le métal utilisé est, de préférence, de l'or. L'épaisseur du matériau d'accroche est typiquement de 0,01 µm et celle de la couche d'or de 0,5 µm. Le produit alors obtenu est illustré à la figure 5.

Ainsi, toutes les étapes de fabrication des éléments constitutifs du capteur sont réalisées alors que la membrane est fixée sur une bague en céramique.

Du fait de son faible coefficient d'extension thermique, cette bague 11' reste rigide et ne se déforme pas à haute température. En conséquence, la membrane 10 ne subira pas de contrainte d'étirement au cours des différentes étapes qui viennent d'être décrites au regard des figures 3 à 5.

Cela ne serait pas le cas si la membrane 10 était directement fixée sur la bague en cuivre 11.

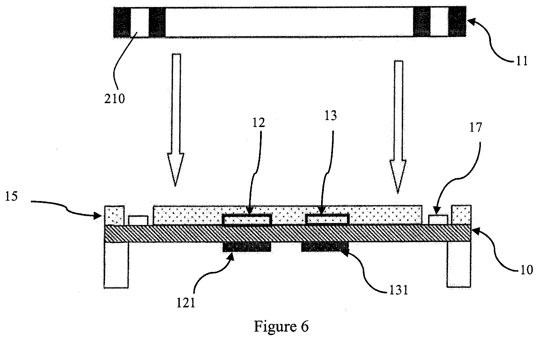

La figure 6 illustre la dernière étape du procédé, dans laquelle la bague en cuivre 11 est collée sur la première face 100 de la membrane 10.

La bague 11' peut alors être éliminée.

A l'issue de cette étape, on obtient la cellule thermométrique 1, illustrée aux figures 1 et 2.

Ainsi, l'utilisation, au cours du procédé de réalisation, d'une bague en céramique, permet de réaliser sans aucune contrainte les éléments thermométriques 12 et 13. De plus, après fixation de la bague de cuivre, ces éléments seront protégés, non seulement par la présence de la couche de résine 15, mais également par la bague 11 elle-même.

Les étapes de réalisation d'une cellule de chauffage selon l'invention sont très similaires aux étapes de réalisation d'une cellule thermométrique qui viennent d'être décrites.

La description sera donc simplifiée en ce qui concerne une cellule de chauffage, seules les différences par rapport au procédé décrit précédemment étant mises en évidence.

Ainsi, sur la première face 200 de la membrane 20 sera déposée une couche de métal, notamment par pulvérisation magnétron.

Le métal déposé est, de préférence, un alliage de cuivre et de nickel. Avec une proportion de 80 % de cuivre et 20 % de nickel, cet alliage présente un coefficient de température assez faible (quelques centaines de ppm par degré), ce qui en fait un matériau adéquat pour un chauffage.

Ce métal peut être déposé directement sur la première face 200 de la membrane 20.

Les éléments actifs de chauffage 22 et 23 sont également obtenus par un processus de microphotolithographie.

Cependant, la dernière étape consistant à enlever la partie de la couche métallique qui n'appartient pas au motif est réalisée par gravure humide, c'est-à-dire une gravure obtenue en effectuant une attaque chimique en solution aqueuse.

Cet alliage présente l'avantage d'avoir une résistivité qui varie peu en fonction de la température et son coefficient de température vaut environ 1,2.10⁻⁴K⁻¹ de la température ambiante à 100°C. En conséquence, un courant d'amplitude constante sera converti en puissance calorifique quasiment constante, sur de grandes plages de température.

Dans cet exemple de réalisation, la capacité calorifique des éléments actifs de chauffage 22 et 23 est de 0,648 mJ/K.

Lorsque la cellule 2 associée à la cellule thermométrique 1 ne comporte pas d'élément de chauffage, sa réalisation est considérablement simplifiée. En effet, elle est obtenue en fixant, sur la première face 200 de la membrane, les moyens de support 21.

On constate ainsi que la capacité calorifique de la membrane, des éléments thermométriques et des éléments de chauffage est très faible, ce qui favorise la diffusion et la conductivité thermique. Ainsi, il est possible de réduire la taille des échantillons tout en ayant une bonne résolution. De plus, dans la mesure où la taille des échantillons est de l'ordre du microlitre, les rampes de température peuvent être importantes et aller jusqu'à une centaine de degrés par minute, sans que des gradients de température n'apparaissent.

Par ailleurs, il convient de noter que la sensibilité de la mesure obtenue dépend non seulement du coefficient de température des éléments thermométriques, mais également de leur polarisation (tension ou courant). La sensibilité du capteur peut donc être adaptée à la physico-chimie de l'échantillon, ce qui lui confère un autre avantage par rapport aux capteurs existants.

A titre d'exemple, la sensibilité de la mesure peut être adaptée en faisant varier la polarisation des thermomètres. Pour des transitions à détecter importantes, on choisira une sensibilité moins importante, alors que pour des événements thermiques très fins à détecter, on choisira une sensibilité plus grande en polarisant plus fortement le thermomètre. Bien sûr dans ce cas, la puissance générée par le ou les thermomètres sera plus grande et la différence de température entre les zones sensibles et le support sera plus importante. Ainsi, lorsque les thermomètres sont montés selon un schéma type pont de Wheatstone, une forte polarisation du pont de Wheatstone donne une forte sensibilité en volt par degré.

Au contraire, dans le cas des thermopiles (capteurs passifs), la sensibilité dépend uniquement du nombre de couples utilisé et on ne peut plus choisir la sensibilité une fois que le capteur est réalisé.

Enfin, l'utilisation d'une bague en matériau céramique lors des étapes de microfabrication des éléments actifs de chauffage, permet de protéger la membrane 20 de toute contrainte.

Le capteur qui vient d'être décrit peut être utilisé dans un calorimètre différentiel, en association avec un four dans lequel est placé le capteur.

Les essais effectués montrent que le capteur selon l'invention permet d'obtenir des vitesses de rampe de température comprises en 0,001 et 100°C/min, dans une gamme de températures comprise entre -20 et 170°C.

Par ailleurs, le volume de l'échantillon ou de la référence est compris entre 0,001 et 0,01 ml.

Les essais montrent également que le capteur selon l'invention présente une plus grande sensibilité en puissance que les calorimètres connus.

Ces essais consistent à placer un échantillon identique entre les deux membranes du capteur et entre les deux paires d'éléments actifs, la température étant de 30°C.

Chaque cellule de chauffage est alimentée pendant 2 minutes, trois valeurs différentes de puissance thermique étant dissipées (0,01 mW, 0,3 mW et 1 mW), correspondant à des énergies dissipées de 1,2 ; 36 et 120 mJ.

La tension de sortie de pont est mesurée au niveau des éléments thermométriques, il s'agit d'une mesure différentielle. Les résultats obtenus conduisent à une sensibilité en puissance du capteur d'environ 2,5 mV/mW, alors que les capteurs connus présentent une sensibilité de l'ordre de 100 µV/mW.

Les signes de référence insérés après les caractéristiques techniques figurant dans les revendications ont pour seul but de faciliter la compréhension de ces dernières et ne sauraient en limiter la portée.

## Revendications

1. Capteur de mesure calorimétrique différentiel comprenant deux cellules, une cellule thermométrique (1) et une autre cellule (2), chaque cellule comprenant :
- une membrane (10, 20) en un matériau à faible conductivité thermique, avec une première face et une deuxième face et
- des moyens de support (11, 21) de la membrane, en un matériau présentant un fort coefficient de diffusivité thermique, en contact avec la première face (100, 200) de la membrane,
la cellule thermométrique (1) comprenant au moins deux éléments actifs thermométriques (12, 13) situés sur ladite première face (100) de la membrane (10) et les deux cellules (1, 2) étant destinées à être assemblées de telle sorte que les deuxièmes faces (101, 201) des membranes desdites cellules soient en vis-à-vis, un échantillon et une référence utilisés pour réaliser la mesure pouvant être placés entre les deux membranes et directement en contact avec lesdites deuxièmes faces (101, 201), et
au moins l'une des cellules comportant un moyen de fermeture (14, 24) en vis-à-vis de la première face de la membrane (10, 20), un espace libre (16, 26) étant ménagé entre ledit moyen de fermeture et la membrane pour un gaz, le moyen de fermeture comportant un perçage qui est en communication avec l'espace libre et la hauteur du moyen de fermeture étant adaptée de façon à créer une conduction thermique de valeur prédéterminée via le gaz entre la membrane et le moyen de fermeture,
ledit capteur de mesure calorimétrique différentiel étant **caractérisé en ce que** l'autre cellule (2) est une cellule de chauffage, au moins deux éléments actifs de chauffage (22, 23) étant situés sur ladite première face (200) de la membrane (20) de cette autre cellule, de telle sorte que chacun desdits éléments actifs de chauffage est sensiblement aligné avec l'un desdits éléments actifs thermométriques (12, 13) de la cellule thermométrique (1), lorsque les deux cellules sont assemblées, l'échantillon et la référence utilisés pour réaliser la mesure pouvant alors être placés entre deux éléments actifs de chacune des deux cellules.

2. Capteur selon la revendication 1, dans lequel la deuxième face (101, 201) de la membrane (10, 20) d'au moins une cellule comporte, en regard desdits au moins deux éléments actifs (12, 13 ; 22, 23), une couche (121, 131) en un matériau présentant une forte conductivité thermique.

3. Capteur selon l'une des revendications 1 à 2, dans lequel lesdits moyens de support (11, 21) sont situés en périphérie de la membrane (10, 20).

4. Capteur selon l'une des revendications 1 à 3, dans lequel les éléments actifs (12, 13 ; 22, 23) de chaque cellule (1, 2) sont enrobés dans une couche (15, 25) de matériau isolant électriquement.

5. Calorimètre différentiel comprenant un capteur de mesure selon l'une des revendications 1 à 4, ledit calorimètre comprenant un four dans lequel est disposé ledit capteur ainsi qu'un moyen de refroidissement.

6. Procédé de fabrication d'un capteur de mesure selon l'une des revendications 1 à 4, consistant à réaliser deux cellules, une cellule thermométrique et une autre cellule, chaque cellule comprenant une membrane (10, 20) en un matériau à faible conductivité thermique,
ce procédé comprenant une étape (a₁) au cours de laquelle sont réalisés simultanément au moins deux éléments actifs (12, 13) sur une première face (100, 200) de la membrane (10, 20) de la cellule thermométrique, et une étape (a₂) dans laquelle sont fixés, sur la première face (100, 200) de la membrane de la cellule thermométrique, des moyens de support (11, 21) présentant un fort coefficient de diffusité thermique,
l'autre cellule étant obtenue en réalisant l'étape (a₂) précédente et les cellules étant destinées à être assemblées, de telle sorte que les deuxièmes faces des membranes respectives desdites cellules sont en vis-à-vis,
ledit procédé étant **caractérisé en ce que**, préalablement à l'étape (a₁), est réalisée une étape (a₀) dans laquelle la membrane est fixée sur une bague (11') en matériau céramique, cette bague étant en contact avec la deuxième face (101) de la membrane, le procédé consistant à réaliser l'étape (a₂) après l'étape (a₁), puis une étape (a₃) dans laquelle la bague (11') est retirée.

7. Procédé selon la revendication 6, dans lequel l'autre cellule qui est une cellule de chauffage (2) est obtenue en mettant en oeuvre les étapes (a₁) et (a₂) précédentes, au moins deux éléments actifs de chauffage étant réalisés au cours de l'étape (a₁), et éventuellement les étapes (a₀) et (a₃).

8. Procédé selon l'une des revendications 6 ou 7 comprenant une étape complémentaire consistant à déposer, après l'étape (a₁), une couche (15, 25) de résine isolante électriquement, de façon à enrober les éléments actifs d'au moins une des deux cellules (1, 2).

9. Procédé selon une des revendications 6 à 8, comprenant une autre étape complémentaire, après l'étape (a₁), consistant à déposer sur la deuxième face (101, 201) d'une membrane (10, 20) d'au moins une des deux cellules (1, 2), et en regard d'un élément actif correspondant (12, 13 ; 22, 23), une couche (121, 131) présentant une forte conductivité thermique.

10. Procédé selon l'une des revendications 6 à 9 dans lequel, pour la réalisation de la cellule thermométrique (1), l'étape (a₁) comprend les étapes suivantes :
(b₁) une étape de dépôt d'une couche de métal,
(b₂) une étape de lithographie, et
(b₃) une étape de gravure ionique.

11. Procédé selon l'une des revendications 6 à 9, dans lequel, pour la réalisation d'une cellule chauffante, l'étape (a₁) comprend les étapes suivantes :
(b'₁) une étape de dépôt d'une couche de métal,
(b'₂) une étape de lithographie, et
(b'₃) une étape de gravure humide.

## Patentansprüche

1. Differentialkalorimetrischer Messsensor, umfassend zwei Zellen, eine thermometrische Zelle (1) und eine weitere Zelle (2), wobei jede Zelle umfasst:
- eine Membran (10, 20) aus einem Material mit niedriger Wärmeleitfähigkeit, mit einer ersten Seite und einer zweiten Seite und
- Membranträgermittel (11, 21), hergestellt aus einem Material mit einem hohen Temperaturleitfähigkeitskoeffizienten, in Kontakt mit der ersten Seite (100, 200) der Membran,
wobei die thermometrische Zelle (1) wenigstens zwei thermometrisch aktive Elemente (12, 13) umfasst, die sich auf der ersten Seite (100) der Membran (10) befinden, und wobei die beiden Zellen (1, 2) dazu bestimmt sind, so zusammengesetzt zu werden, dass die zweiten Seiten (101, 201) der Membranen der Zellen einander zugewandt sind, eine Probe und eine Referenz zur Durchführung der Messung, die zwischen den beiden Membranen angeordnet und direkt in Kontakt mit den zweiten Seiten (101, 201) gebracht werden kann, und
mindestens eine der Zellen mit einem Verschlussmittel (14, 24), das der ersten Seite der Membran (10, 20) zugewandt ist, wobei zwischen dem Verschlussmittel und der Membran ein Freiraum (16, 26) für ein Gas vorgesehen ist, wobei das Verschlussmittel eine Bohrung aufweist, die mit dem Freiraum in Verbindung steht, und die Höhe des Verschlussmittels so angepasst ist, dass eine Wärmeleitung mit einem vorbestimmten Wert über das Gas zwischen der Membran und dem Verschlussmittel erzeugt wird,
wobei der differentielle kalorimetrische Messsensor **dadurch gekennzeichnet ist, dass** die weitere Zelle (2) eine Heizzelle ist, wobei mindestens zwei aktive Heizelemente (22, 23) auf der ersten Seite (200) der Membran (20) der weiteren Zelle angeordnet sind, sodass jedes der aktiven Heizelemente im Wesentlichen mit einem der aktiven thermometrischen Elemente (12, 13) der thermometrischen Zelle (1) ausgerichtet ist, wenn die beiden Zellen zusammengebaut sind,
die Probe und die Referenz, mit denen die Messung durchgeführt wurde, können dann zwischen zwei aktiven Elementen jeder der beiden Zellen platziert werden.

2. Sensor nach Anspruch 1, wobei die zweite Seite (101, 201) der Membran (10, 20) wenigstens einer Zelle im Bereich der wenigstens zwei aktiven Elementen (12, 13; 22, 23) eine Schicht (121, 131) aus einem Material mit hoher Wärmeleitfähigkeit umfasst.

3. Sensor nach einem der Ansprüche 1 bis 2, wobei sich die Stützmittel (11, 21) am Rand der Membran (10, 20) befinden.

4. Sensor nach einem der Ansprüche 1 bis 3, wobei die aktiven Elemente (12, 13; 22, 23) jeder Zelle (1, 2) in eine Schicht (15, 25) aus elektrisch isolierendem Material eingebettet sind.

5. Differenzkalorimeter, umfassend einen Messsensor nach einem der Ansprüche 1 bis 4, wobei das Kalorimeter einen Ofen umfasst, in dem der Sensor und ein Kühlmittel angeordnet sind.

6. Verfahren zur Herstellung eines Messsensors nach einem der Ansprüche 1 bis 4, umfassend die Herstellung von zwei Zellen, einer thermometrischen Zelle und einer weiteren Zelle, wobei jede Zelle eine Membran (10, 20) aus einem Material mit niedriger Wärmeleitfähigkeit umfasst,
wobei dieses Verfahren einen Schritt (a₁) umfasst, bei dem mindestens zwei aktive Elemente (12, 13) gleichzeitig auf einer ersten Fläche (100, 200) der Membran (10, 20) der thermometrischen Zelle bereitgestellt werden,
und einen Schritt (a₂), in dem Trägermittel (11, 21) mit einem hohen thermischen Diffusionskoeffizienten auf der ersten Seite (100, 200) der Membran der thermometrischen Zelle befestigt sind,
wobei die andere Zelle durch Ausführen des vorherigen Schrittes (a₂) erhalten wird und die Zellen zum Zusammenbau bestimmt sind, so dass die zweiten Flächen der jeweiligen Membranen der Zellen einander zugewandt sind,
wobei das Verfahren **dadurch gekennzeichnet ist, dass** vor Schritt (a₁) ein Schritt (a₀) durchgeführt wird, bei dem die Membran an einem Ring (11') aus Keramikmaterial befestigt wird, wobei dieser Ring mit der zweiten Fläche (101) der Membran in Kontakt steht, wobei das Verfahren darin besteht, Schritt (a₂) nach Schritt (a₁) durchzuführen, dann einen Schritt (a₃), bei dem der Ring (11') entfernt wird.

7. Verfahren nach Anspruch 6, wobei die andere Zelle, die eine Heizzelle (2) ist, die durch Ausführen der vorhergehenden Schritte (a₁) und (a₂) erhalten wird, wobei mindestens zwei aktive Heizelemente in Schritt (a₁) und optional in den Schritten (a₀) und (a₃) bereitgestellt werden.

8. Verfahren nach einem der Ansprüche 6 oder 7, umfassend einen komplementären Schritt des Aufbringens einer Schicht (15, 25) aus elektrisch isolierendem Harz nach Schritt (a₁), um die aktiven Elemente von mindestens einer der beiden Zellen (1, 2) zu beschichten.

9. Verfahren nach einem der Ansprüche 6 bis 8, umfassend einen weiteren komplementären Schritt nach Schritt (a₁), bei dem auf der zweiten Seite (101, 201) einer Membran (10, 20) von mindestens einer der beiden Zellen (1, 2) und im Bereich eines entsprechenden aktiven Elements (12, 13; 22, 23) eine Schicht (121, 131) mit einer hohen Wärmeleitfähigkeit aufgebracht wird.

10. Verfahren nach einem der Ansprüche 6 bis 9, bei dem der Schritt (a₁) zum Bereitstellen der der thermometrischen Zelle (1) die folgenden Schritte umfasst:
(b₁) einen Schritt zum Aufbringen einer Metallschicht,
(b₂) einen Lithographieschritt und
(b₃) einen Ionenätzschritt.

11. Verfahren nach einem der Ansprüche 6 bis 9, worin der Schritt (a₁) zur Bereitstellung einer Wärmezelle die folgenden Schritte umfasst:
(b'₁) einen Schritt zum Aufbringen einer Metallschicht,
(b'₂) einen Lithographieschritt und
(b'₃) einen Nassätzschritt.

## Claims

1. A differential calorimetric measurement sensor comprising two cells, a thermometric cell (1) and another cell (2), each cell comprising:
- a membrane (10, 20) made of a material with low thermal conductivity, with a first face and a second face, and
- support means (11, 21) for the membrane, made of a material exhibiting a high thermal diffusivity coefficient, in contact with the first face (100, 200) of the membrane,
the thermometric cell (1) comprising at least two active thermometric elements (12, 13) situated on said first face (100) of the membrane (10) and the two cells (1, 2) being intended to be assembled in such a way that the second faces (101, 201) of the membranes of said cells are facing one another, a sample and a reference used to perform the measurement being able to be placed between the two membranes and directly in contact with said second faces (101, 201), and
at least one of the cells comprising a closure means (14, 24) facing the first face of the membrane (10, 20), a free space (16, 26) being formed between said closure means and the membrane for a gas, the closure means including a piercing which is in communication with each of the spaces and the height of the closure means being adapted in such a way as to create a thermal conduction of predetermined value via the gas between the membrane and the closure means,
said differential calorimetric measurement sensor being **characterized in that** the other cell (2) is a heating cell, at least two active heating elements (22, 23) being situated on said first face (200) of the membrane (20) of this other cell, such that each of said active heating elements is substantially aligned with one of said active thermometric elements (12, 13) of the thermometric cell (1), when the two cells are assembled together, the sample and the reference used to perform the measurement then being able to be placed between two active elements of each of the two cells.

2. The sensor as claimed in claim 1, in which the second face (101, 201) of the membrane (10, 20) of at least one cell comprises, facing said at least two active elements (12, 13; 22, 23), a layer (121, 131) made of a material exhibiting a high thermal conductivity.

3. The sensor as claimed in one of claims 1 or 2, in which said support means (11, 21) are situated at the periphery of the membrane (10, 20).

4. The sensor as claimed in one of claims 1 to 3, in which the active elements (12, 13; 22, 23) of each cell (1, 2) are coated in a layer (15, 25) of electrically insulating material.

5. A differential calorimeter comprising a measurement sensor as claimed in one of claims 1 to 4, said calorimeter comprising an oven in which said sensor is arranged, and a cooling means.

6. A method for manufacturing a measurement sensor as claimed in one of claims 1 to 4, consisting in producing two cells, a thermometric cell and another cell, each cell comprising a membrane (10, 20) made of a material with low thermal conductivity,
this method comprising a step (a₁) during which at least two active elements (12, 13) are produced simultaneously on a first face (100, 200) of the membrane (10, 20) of the thermometric cell,
and a step (a₂) in which support means (11, 21) exhibiting a high thermal diffusivity coefficient are fixed onto the first face (100, 200) of the membrane of the thermometric cell,
the other cell being obtained by performing the preceding step (a₂) and the cells being intended to be assembled together, such that the second faces of the respective membranes of said cells are facing one another,
said method being **characterized in that**, prior to the step (a₁), a step (a₀) is performed in which the membrane is fixed onto a ring (11') made of ceramic material, this ring being in contact with the second face (101) of the membrane, the method consisting in carrying out the step (a₂) after the step (a₁), then a step (a₃) in which the ring (11') is removed.

7. The method as claimed in claim 6, in which the other cell which is a heating cell (2) is obtained by implementing the preceding steps (a₁) and (a₂), at least two active heating elements being produced during the step (a₁), and possibly the steps (a₀) and (a₃).

8. The method as claimed in one of claims 6 or 7, comprising a complementary step consisting in depositing, after the step (a₁), a layer (15, 25) of electrically insulating resin, so as to coat the active elements of at least one of the two cells (1, 2).

9. The method as claimed in one of claims 6 to 8, comprising another complementary step, after the step (a₁), consisting in depositing, on the second face (101, 201) of a membrane (10, 20) of at least one of the two cells (1, 2), and facing a corresponding active element (12, 13; 22, 23), a layer (121, 131) exhibiting a high thermal conductivity.

10. The method as claimed in one of claims 6 to 9, in which, for the production of the thermometric cell (1), the step (a₁) comprises the following steps:
(b₁) a step of deposition of a layer of metal,
(b₂) a lithography step, and
(b₃) an ionic etching step.

11. The method as claimed in one of claims 6 to 9, in which, for the production of a heating cell, the step (a₁) comprises the following steps:
(b'₁) a step of deposition of a layer of metal,
(b'₂) a lithography step, and
(b'₃) a wet etching step.
